Europäisches Patentamt

European Patent Office

Office européen des brevets

(11) Publication number: **0 136 379 B1**

# EUROPEAN PATENT SPECIFICATION

(45) Date of publication of patent specification: **02.05.91**  (51) Int. Cl.⁵: **G06F  15/40**

(21) Application number: **83305983.5**

(22) Date of filing: **03.10.83**

(54) **Word comparator means and method.**

(43) Date of publication of application:
**10.04.85 Bulletin  85/15**

(45) Publication of the grant of the patent:
**02.05.91 Bulletin  91/18**

(84) Designated Contracting States:
**DE FR GB**

(56) References cited:
**US-A- 3 333 243**
**US-A- 4 385 371**
**US-H- 922 008**

**COMMUNICATIONS OF THE ACM, vol. 7, no. 11, November 1964, pages 647-653, New York, US; R.D. FAULK: "An inductive approach to language translation"**

**IBM TECHNICAL DISCLOSURE BULLETIN, vol. 15, no. 7, December 1972, page 2064, New York, US; E. KELLERMAN: "Method for recognizing character string similarity"**

(73) Proprietor: **Proximity Technology Inc.**
**3511 N.E. 22nd Avenue**
**Fort Lauderdale Florida 33308(US)**

(72) Inventor: **Yianilos, Peter Nicholas**
**3807 N.E. 36th Street**
**Fort Lauderdale Broward Florida(US)**

(74) Representative: **Miller, Joseph et al**
**J. MILLER & CO. Lincoln House 296-302 High Holborn**
**London WC1V 7JH(GB)**

## Description

The invention relates to word comparator means for providing numeric measurement of the degree of word similarity between compared words.

In operation the word comparator means is connectable in a computer storage loop to locate and extract records that are similar to the supplied query. Inexact queries can locate records.

An associative memory is a special kind of storage device. Whereas most memories are numerically addressed, associative memories are addressed via their contents. For example, one might ask an associative memory to return all records containing the letters "ZXU" in columns one, two and three respectively. The address applied to an associative memory is the query. If some record exactly satisfies the query, then the query is said to be exact, otherwise it is said to be inexact. Conventional associative memories provide no information in response to an inexact query. Inexact queries are merely rejected. If a record exists within the associative memory that is only slightly different from the supplied query, then in many cases it would be desirable to know of its existence. Such records are minor corruptions of the query. Alternatively, they are very similar to the query. Some related concepts were discussed in the following articles:

(1) "The application of a pattern matching algorithm to searching medical record text," in the proceedings of the second annual symposium on computer applications in medical care, p. 308-313, IEEE 78CH 1413-3, by the inventor et al;

(2) The Ramon D. Faulk article in communications of the ACM, Vol. 7/Number II/November 1964, pages 647-653;

(3) The A.J. Szanser article, Mathematical Linguistics Error-Correcting Methods in Natural Language Processing, Information Processing .68-North-Holland Publishing Company-Amsterdam (1969), pages 1412-1416; and

(4) The A. J. Szanser article, The Computer Journal, Vol. 16, Number 2, pages 132-134.

A storage loop is formed when a storage device repeatedly and sequentially transmits its entire contents to external devices over a high speed data bus. An associative memory may be formed by attaching to this bus a device whose function it is to scrutinize in a passive manner the data stream originating from the storage device as it passes by on the bus. This attached device senses data appearing on the bus that is related in some predetermined fashion to a supplied query.

Central to associative memories of this type is some sort of word comparator device. In the prior art, a simple digital comparator distinguishes two cases: equal and unequal. Other devices can detect certain special corruptions such as the transposition of two characters, the deletion of a single character. Still other devices compare two words to arrive at an indication of how similar they are. This device recodes the words as binary strings and then measures the Hamming distance between them. Devices in the prior art do not, however, seem to compare words in a general way that approaches the sort of similarity recognizing ability found in humans. United States Patents 3,333,243; 3,651,459; and 4,084,260 and 4,385,371 show the state of the prior art, wherein US-A-4,385,371 relates to prior art of the type specified in the preamble of Claim 1.

This invention as claimed relates to a new and improved word comparator device referred to hereinafter as a word associator circuit that provides a numeric measurement of the degree of a word similarity between the compared words as defined by mathematical formula. This invention as claimed also relates to an associative retrieval system and method for retrieval of inexact queries in a quick and expeditious manner. The circuit may be an electrical digital circuit or other type of circuitry that will provide an output conforming to a mathematical formula to provide an improved word comparator function. An associative memory is normally thought of as a device which responds only to exact queries. Some may respond in a limited manner to inexact queries, for example see "Backend Processors is REM the Answer" in Datamation, March 1978, pg. 206-207. The system and method of this invention as claimed uses the improved word comparator device to form an associative memory which responds to inexact queries in a new and useful way. This word comparator device is used to rapidly locate records most similar to a query. Similarity is defined by certain mathematical formula and is measured using a high speed digital circuit referred to hereafter as a word associator circuit in the preferred embodiment.

Similarity has three components; word, numeric, and mask. Most central to this invention is the notion of word similarity. Words are strings of symbols from some alphabet and word similarity is a measurement of the similarity between two words. Several variable parameters are involved in the definition of word similarity, making it very flexible. Of significance is the ease with which the degree of word similarity may be determined using digital circuits. Using existing technology word associator circuits may be built to process serial data at rates in excess of 20,000,000 characters per second. Such a circuit is described hereinbelow.

The system includes the use of one or more associator circuits in storage loops to locate and extract records most similar to the supplied query. The system's architecture is preferably totally parallel so that it may be configured to process any number of simultaneous requests. Its memory is partitioned into storage loops so that through suitable configuration, arbitrarily large datasets may be processed. Attached to each storage loop via a dynamically variable network are multiple associator circuits to locate and extract the records most similar to the supplied query. By varying the number of storage loops versus the number of associator circuits, configurations may achieve a wide range of cost/response-time possibilities. In use, the associative retrieval system with associator circuits could off load from a host processor, the task of searching for database records. In doing this, it could provide improved services as well as entirely new services.

The method for retrieval as described in detail herein that conforms to a mathematical formula also provides a new and improved invention over and above the prior art.

When queries of words are made seeking records, exact records as well as slightly different records or similar records, are produced as an output. Such outputs are said to be minor corruptions of the query or are said to be in close similarity with the query. A measurement of the degree of similarity between two strings of symbols from some alphabet is defined in "The definition, computation and application of symbol string similarity functions", Emory University, M.S. Thesis, Department of Mathematics, 1978, by the inventor. This measurement agrees well with intuition while remaining mathematically simple and easy to compute, see the article (1) referred to hereinabove. Using this measurement, minor corruptions may be located, thus extending the conventional function of an associative memory into the area of a similarity memory. Of significance is the fact that this measurement may be trivially computed using the new and improved digital circuitry disclosed herein. Circuits to compute it are described herein and may be built to achieve very high processing rates. Therefore, in some applications, minor corruptions may be located without additional overhead.

The basic mathematics of word similarity was developed by the inventor and constituted his Master's thesis at Emory University, Atlanta, Georgia, June, 1978 referred to herein above. The inventor is also primary author of a paper presented to and published by the IEEE article (1) referred to hereinabove. This paper describes the application of word similarity to searching raw narrative medical record text.

It is an object of this invention to provide an associative memory circuit that is a new and improved word associator circuit.

It is another object of this invention to provide a word associator circuit that provides a measurement of the degree of word similarity.

It is another object of this invention to provide a word associator circuit that provides a numeric measurement of the degree of word similarity between the compared words as defined by a mathematical formula.

It is another object of this invention to provide a word associator circuit in the form of an electrical circuit for providing a word comparison conforming to the mathematical formula.

It is another object of this invention to provide an associative retrieval system by connecting at least one word associator circuit into at least one storage loop by dynamically variable networks.

A further object of this invention is to provide a method of processing data for word comparison that conforms to a particular mathematical formula.

An additional object of this invention is to provide a system and method of retrieving similar words, numbers, and/or masks from inexact queries.

In accordance with these and other objects which will be apparent hereinafter, the instant invention will now be described with particular reference to the accompanying drawings.

Figure 1 is a block diagram of an associative retrieval system.

Figure 2 is a block diagram of the associator circuit illustrated in Figure 1.

Figure 3 is an illustration of the timing of $\phi$ and $\theta$.

Figure 4 is a block diagram of the basic word associator or comparator circuit.

Figure 5 is a block diagram of another word associator or comparator circuit.

Figure 6 is a schematic diagram of the selector circuit shown in Figure 4.

Figure 7 is a schematic diagram of the tally memory circuit shown in Figure 4.

Figure 8 is a schematic diagram of the add circuit shown in Figure 4.

Figure 9 is a schematic diagram of the latch circuit shown in Figure 4.

Figure 10 is a schematic diagram of the test circuit shown in Figure 4.

Figure 11 is a schematic diagram of the add-latch circuit shown in Figure 4.

Figure 12 is a schematic diagram of another add-latch circuit shown in Figure 4.

Figure 13 is an illustration of the operation of the word comparator.

Best Mode for Carrying Out the Invention

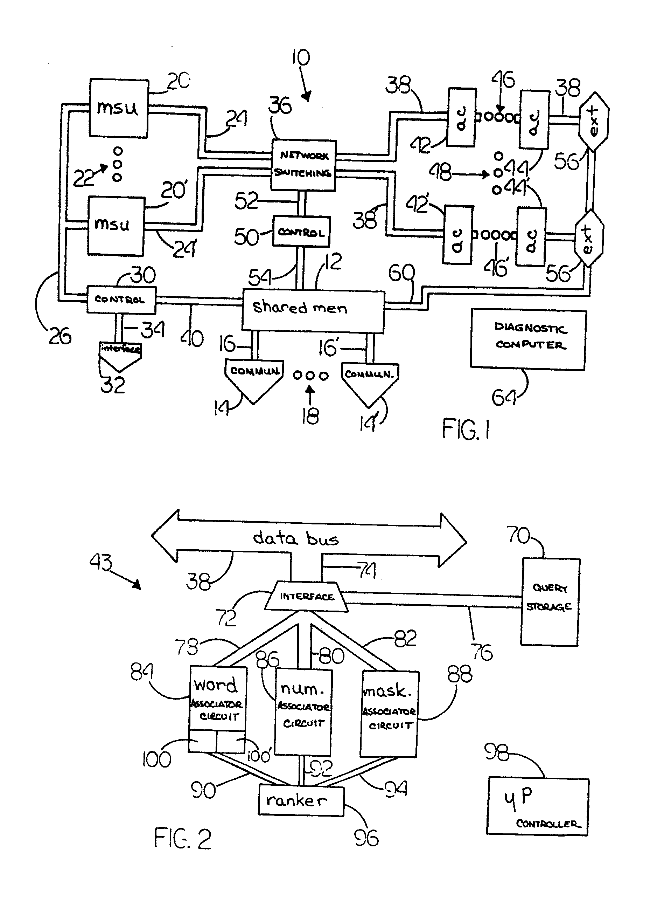

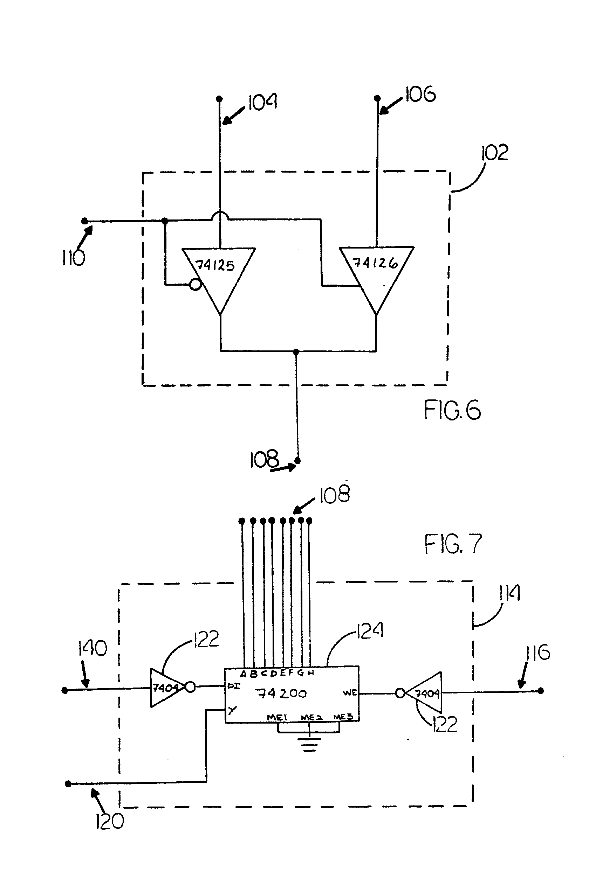

This invention is a new and improved associative memory circuit that is a word comparator device which provides a numeric measurement of the degree of word similarity between the compared words as defined by mathematical formula. The associative memory circuit includes a word associator circuit shown in detail as an electrical digital circuit in Figures 6 through 12. The system or associative memory circuit is shown in Figure 1. This associative memory circuit is an improved associative retrieval device that includes the use of the word associator or comparator circuit connected in a storage loop to locate and extract records that are most similar to the supplied query. Inexact queries will rapidly locate records similar with respect to word, numeric and mask related measurements of similarity. The new and improved method that is set forth below in detail provides a method of word comparison and a method of processing in the improved associative memory circuit or associative retrieval device. The processing is preferably in a parallel configuration that provides rapid response to queries, while processing a large number of simultaneous requests.

Referring now to Figure 1, most internal data traffic within the associative memory circuit 10 passes through shared memory 12, a time multiplexed multi-port random access read-write memory of any well known design. Each of the many ports of the shared memory 12 is allotted a brief time slice on the order of one millisecond. A port may disconnect prior to this time elapsing.

The associative memory circuit 10 communicates with the outside world through its communications modules 14 and 14' of any a well known design. A plurality of communications modules may be connected as illustrated by numeral 18 and the small circles or dots. The communication modules 14 and 14' are microcomputer based flexible interfaces responsible for decoding requests and then supervising the operations of the associative memory circuits 10 to satisfy the request. The communications modules or circuits may communicate with the other associative memory circuits 10 using shared memory through buses 16 and 16' in any well known manner and by use of any well known design. These communication modules might also perform considerable preprocessing before passing a query onto the other system components.

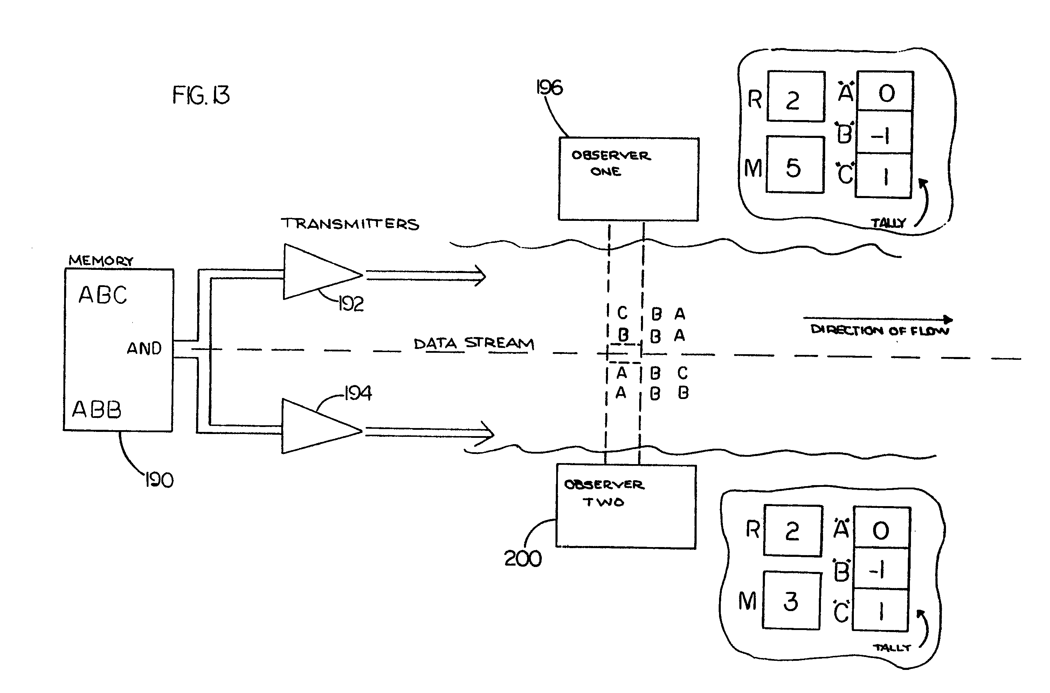

The main storage units (MSU) 20 and 20' of any well known design are devices that contain the actual records to be searched in memory units of any well known design. The main storage units contain any of a variety of well known control circuits to transmit these records in a fixed format over a bus. A plurality of main storage units may be used as illustrated by number 22 and the dots. The transmission format requires the simultaneous transmission of record characters taken sequentially from the record moving from right to left and from left to right, see Figure 13 and the in-use description set forth hereinbelow. Numeric portions of a record are transmitted separately. The bus or lines 24 and 24' also contain control and timing signals, error correction codes and a data path of well known design for use in the communications between associator circuits 42, 44, 42' and 44' and extractor circuits 56 and 56'. Within an MSU 20 and 20', data might be compressed to conserve resources by any well known means. The main storage units (MSU) 20 and 20' might be formed using virtually any of today's data storage devices. Following the transmission of each record along lines 24 and 24', a short blanking period is required to permit the associator circuits to initialise themselves for another record. Prior to the transmission of each records data, the MSU 20 and 20' must transmit an internal record number for the record that follows. These numbers should be assigned sequentially by the MSU 20 and 20'.

The control circuit 30 is connected to the MSU devices 20 and 20' by bus 26. The control circuit 30 is responsible for all update and control of the MSU's. The control circuit may consist of one or more simple microcomputers of well known design. Control circuit 30 communicates through shared memory 12 over bus 40. Optionally, a direct interface 32 of well known design might be attached by bus 34. This would permit a direct data path from an MSU 20 and 20' to an external high speed device. This would facilitate the rapid loading of an entire MSU 20 and 20' as might occur at bootstrap time. All data storage loops generated by the MSU devices 20 and 20' feed into network switching 36 by bus 24 and 24'. The network switching circuit 36 is responsible for routing through bus 38 or 38' data from an MSU 20 and 20' to a vacant associator circuit 42 or 44 as well as 42' or 44' to satisfy a query. Additional associator circuits may be connected between 42 and 44 and 42' and 44' as illustrated by numerals 46 and 46' and the dots. Additional parallel circuits may also be interconnected as illustrated by numeral 48 and the dots. Network switching circuit 36 is connected to a control device 50 of well known design by bus 52 which processes requests communicated through shared memory 12 by connection bus or line 54. Control device 50 decodes these requests and decides which requests are to be processed and in what order. Then control device 50 communicates to network switching 36 over line 52, a specific order to reconfigure the network.

The associator circuits (ac) 42, 44, 42' and 44', are an important part of this invention. The associator circuits 42, 44, 42' and 44' are connected in strings terminated at one end by a single or multiple extractor circuits 56 and 56' respectively by continuations of bus 38 or 38' respectively and at the other end by the network switching module 36. Data from a selected MSU passes through network switching 36 and then through an associator circuit 42, 44, 42' and 44'. This circuit scrutinizes the data as it passes, looking for records that are very similar to the query provided. Of significance here is the fact that the word associator circuits, a part of 42, 44, 42', and 44' (within each associator circuit) can look for similar records at very high data rates. It is expected that data rates on the bus in excess of 20,000,000 characters per second are quite possible using today's standard technology. The associator circuits 42, 44, 42', and 44' flag the most similar records and they are then extracted from the data stream by the extractor circuits 56 and 56' and eventually pass back through shared memory 12 over bus 60 to the communications circuits 14 and 14'.

The diagnostic computer 64, also of any well known design, is connected in a well known manner to the associative memory 10 to provide system performance statistics and maintenance information in a well known manner.

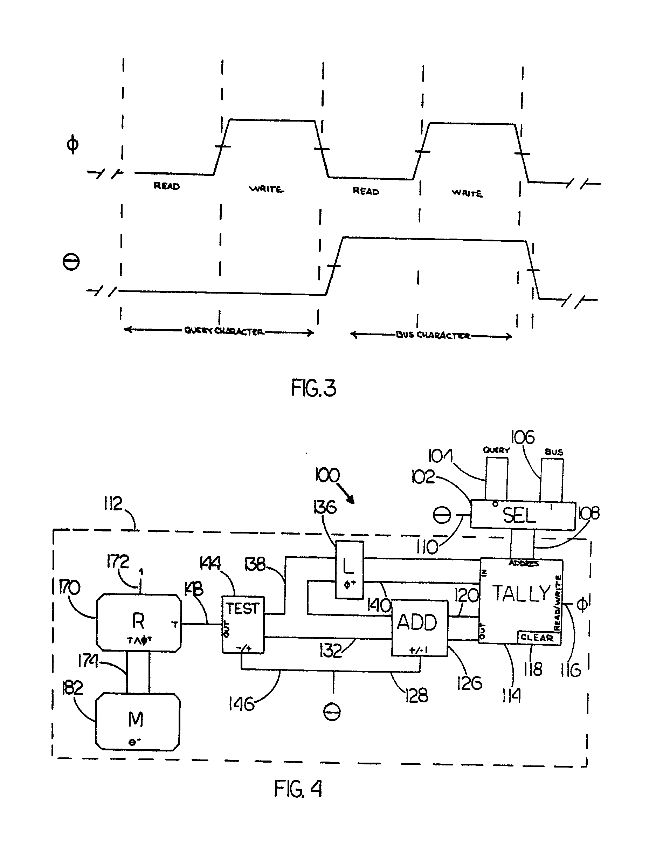

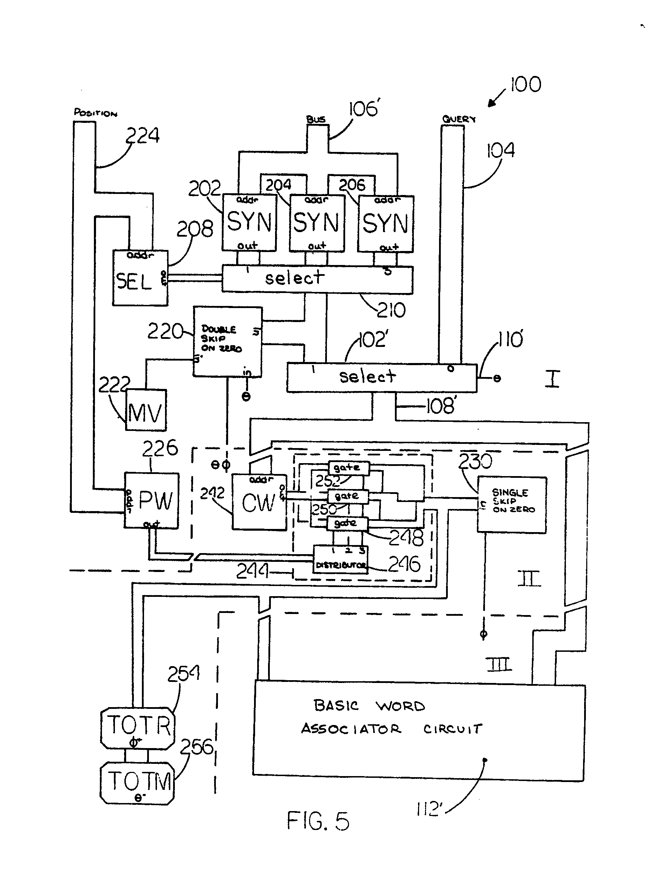

Referring now to Figure 2, the basic module is referred to by numeral 43 which is a more detailed block diagram of associator circuit 42 and 42' of Figure 1. Each pair of associator circuits in Figure 1 is similar to the Figure 2 illustration. Figure 2 shows the associator circuit 43 along with the basic interconnections. The query is stored in query storage 70. As records pass by on the data bus 38, the records are received by the associator circuit on interface 72 over bus 74 where the records are merged with query characters transmitted over bus 76 in an appropriate manner and then forwarded through buses 78, 80, and 82 to the three types of associator circuitry. The three types of associator circuitry are: (1) a word associator circuit 84, (2) a number associator circuit 86, and (3) a mask associator circuit 88. Within the word associator circuit 84 exists two circuits designated by numerals 100 and 100', one of which is shown in greater detail in block diagram in Figure 4 which is illustrated in schematic form in Figures 6 through 12. The word associator circuit 84 combines the output of circuits 100 and 100' at the end of each record to arrive at the degree of word similarity. If the basic circuit of Figure 4 is used then at the end of each record, the M output from each copy of the circuit are added together by any well known means to arrive at the numerator of the fraction that equals the degree of word similarity. The denominator is computed by any well known means including table lookup by circuit 84 and is equal to $L(L+1)$ where L is the length of the compared words. If the more complex circuit of Figure 5 is used, then the numerator is computed by any well known means and is equal to twice the sum of the M quantities output from the two copies of the circuit. The denominator is computed by any well known means and is equal to the sum of the TOTM quantities output from each copy of the circuit. The word associator circuit 84 may or may not actually perform a division to arrive at the degree of word similarity. Instead, the ranker 96 and the other associator circuits 80 and 88 might work entirely with fractional representations of similarity. Using the basic circuit of Figure 4 as 100 and 100' in Figure 2, computes the basic form of word similarity given by the mathematical formula disclosed herein. It should also be noted the Figure 5 is an enhanced version of the circuit in Figure 4.

The word associator circuit 84 is mainly made up of circuits 100 and 100' and interconnecting circuitry of well known design.

Again, referring to Figure 2, at the end of each record, the three associators forward their "opinion" of how similar the record and the query were over bus 90, 92, and 94 respectively to a ranker 96 of well known design. If the record was a perfect match, then it is marked by the ranker 96 for immediate extraction. Otherwise it is ranked relative to the prior records processed. Only the N highest ranking records are maintained in the ranker 96 by their internal record numbers. Here, N is an integer design parameter of well known design. Loading of the many parameters involved in the association process is controlled by an onboard microprocessor or controller 98 of well known design. The microprocessor is connected to the basic module in a well known manner. When all records have been observed, the ranker waits for the highest ranking records to appear again in the storage loop. As they appear, the ranker 96 marks them for extraction in any well known manner.

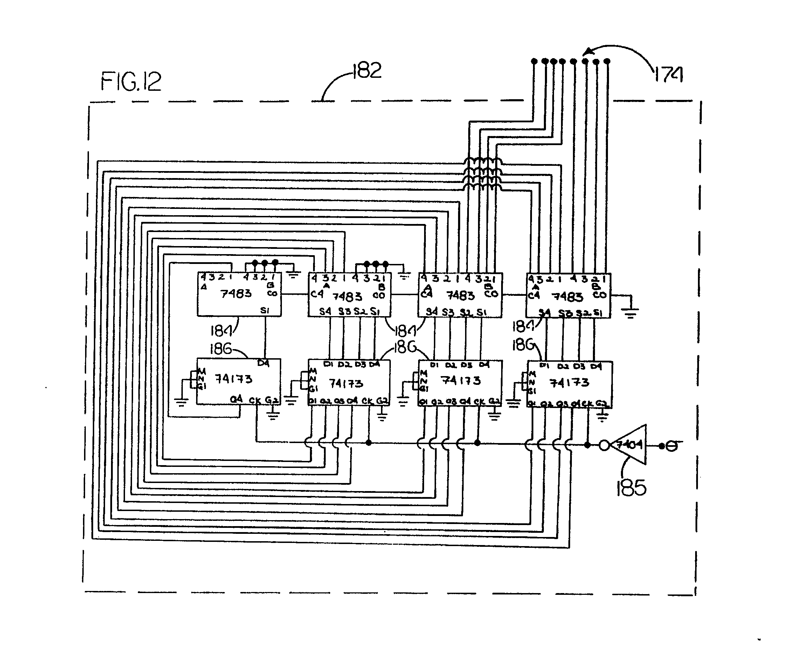

The basic method for computing the degree of word similarity in a non-complex and expeditious manner involves processing symbols as they occur in a bidirectional serial data stream. By bidirectional serial, is meant that successive positions from each of the two words under comparison and from their flips are simultaneously transmitted. For example, imagine two observers of the data stream performing the procedure or method as illustrated in Figure 12. Of significance is the fact that each observer needs knowledge only of the data instantaneously before him in the data stream. The procedure is described from the standpoint of these observers, with the information they must remember, computations they must perform and decisions they must make. Each observer performs an identical method, the first observes the transmission of the words, the second observes the transmission of the flips of the words. Before starting, each observer must perform certain initial tasks. After all data has passed, they combine their knowledge to arrive at the degree of word similarity between the transmitted words. Hereafter, the block diagram shown in Figure 4 will be described, second the method performed by each observer will be described and then the method in which their knowledge is eventually combined will be described.

Referring now to Figure 4, the one word associator circuit in block diagram form is illustrated as numeral 100. Two of these circuits 100 are included in the word associated circuit 84 in Figure 2. The data selector 102 illustrated in Figure 4 is shown in detail in Figure 6 and may utilize two quadruple bus buffer gates, such as Texas Instruments, Incorporated's circuits 74125 and 74126, Exhibit A, pages 38 and 39 of EP-A-0,136,379. Reference to Exhibit A, AA, B, C, D, E, EE and EEE, both here and elsewhere in the specification refer to pages of the TTL Data Book for Design Engineers, First Edition published by Texas Instruments Incorporated and copyrighted 1973, which pages were included as pages 38 to 61 of the specification originally filed with this application and published as part of EP-A-0,136,379, to which reference is directed for convenience. It has two input buses 104 and 106 entering from above. One of these two in one time frame is routed to a single output 108 exiting below. Figure 6 discloses the schematic for a single bus line. Clock input potential Θ 110 is connected to the selector 102.

Two clocks are utilized in circuit 100, Figure 4. They are referred to as φ and Θ and graphically illustrated in Figure 3 to disclose their inter-relationship. Their inter-relationship and purpose is described and disclosed in the diagrams illustrated in Figure 3. The purpose of φ is to select either the read or write mode of operation in the tally memory 114 in Figure 4 and to provide certain triggers in latches 170 and 136 of Figure 4. When φ is low, the read mode of operation in 114 is selected. When φ is high, the write mode of operation in 114 is selected. The event consisting of a low to high transition of φ may serve as a trigger to latch components 170 and 136 of Figure 4.

The purpose of Θ is to define whether a query or a bus character is currently being processed. A complete cycle of φ corresponding to a read/write cycle in 114 occurs during each half cycle of Θ as shown in Figure 3. Another purpose of Θ is to provide a trigger to latch 182 of Figure 4. The event consisting of a high to low transition of Θ and may serve as a trigger to latch 182. The clock Θ is used as a control input in blocks 144,126 and 102 of Figure 4.

The main portion of the Figure 4 circuit is designated by numeral 112 and includes a random access read/write memory 114 referred to as tally or a tally memory. The memory address enters from above through bus 108. The read/write mode of operation is selected by the read/write potential φ entering from the right through line 116 from a clock means of well known design not shown. When read/write potential is low, the read mode is selected. When read/write potential is high, the write mode is selected.. Data exists from the lower left on bus 120 and φ enters from the upper right.

In the preferred embodiment, tally is organized as 256 8 bit words. Thus, addresses and data are 8-bit quantities. Figure 7 shows the schematic for each bit of a tally word. The tally may include one or more hex inverters 122, such as Texas Instrument Incorporated hex inverter No. 7404, Exhibit AA, pages 40 and 41 of EP-A-0136379 and a 256-bit read/ write memory 124, such as No. 74200, Exhibit B, pages 42 to 48 of EP-A-0136379 and made a part hereof disclosing the circuits. It should be designed so that its contents may rapidly be set to zero by clear means 118. Simply setting all cells simultaneously to zero, may however not be practically feasible due to power surge and overheating considerations. Therefore, several cycles may be necessary to clear the memory. Each cycle would then clear a fixed portion of the memory. Also, it is not necessary to actually set all of the cells to zero. An extra bit associated with each word could be maintained. To clear the memory, only those extra bits would be cleared. Then when a memory word is read, this extra bit is tested. If it is zero, then zero is read out instead of the actual memory contents. This extra bit is set only when its associated location is written into. Now, if one is read out, then the actual memory contents are presented as usual to the outside world. In this way, the extra bits affect a logical clearing of the memory while avoiding a physical clearing of all of the cells. Techniques such as these serve to significantly expedite the clearing operation, but such procedures are not necessary because there are well known standard procedures available.

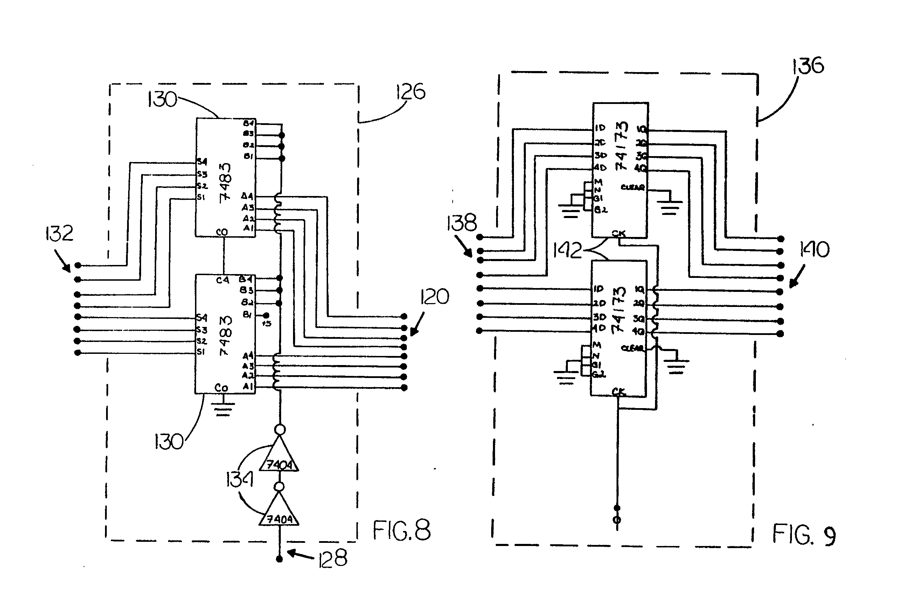

The add block Figure 4 is an incrementer/ decrementer 126. Data enters from the right. Depending on the state of input potential, the input potential value of the entering data is either incremented or decremented before exiting the two 4 bit binary full adders circuit 130 on bus 132, as shown in Figure 8. Each adder circuit 130 may include a Texas Instrument Incorporated 4-bit binary full adder No. 7483, Exhibit C, pages 49 to 52 of EP-A-0136379. Hex inverters 134, such as Texas Instruments Incorporated's No. 7404, Exhibit AA, 40 & 41 of EP-A-0136379, are connected between the input potential over bus 128 and the adders 130. The incrementer/ decrementer 126 in Figure 4 is actually an adder in which one of the summands is restricted to either plus or minus one. If input potential of 128 is zero, then plus one is added. If input potential of 128 is one, then minus one is added.

A positive edge triggered data latch 136 in Figure 4 is connected to bus 132 by bus 138. Data enters

6

through bus extension 138 from the left and exits from the right on bus 140 to tally 114. On the positive going edge of read/write potential actuated by input $\phi$, the contents entering latch 136 are latched and become the output from the latch over bus 140. In the preferred embodiment shown in Figure 9, the latch is a 4-bit D-type register 142 with 3-state output shown in Figure 9, such as Texas Instruments Incorporated No. 74173 Exhibit D, pages 53 to 55 of EP-A-0136379.

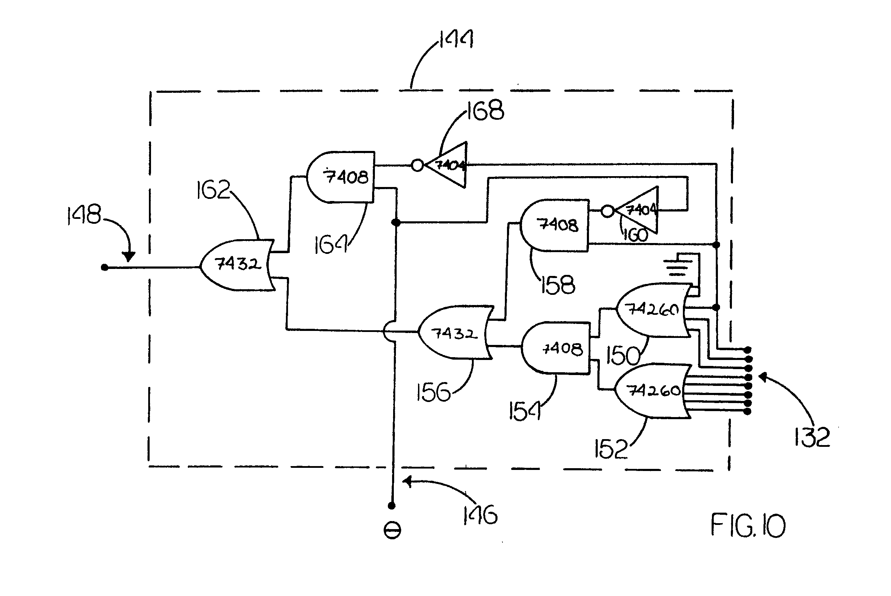

A convertible sign tester 144 in Figure 4 has an input through bus 132 for data entering from the right and the tester 144 determines if this data is non-positive or non-negative, depending on the state of the input potential on bus 146 entering from below. The test is performed relative to two's complement arithmetic. If the input potential is low, then test will output high on output bus 148 to the left, provided that its input is greater than or equal to zero. In the preferred embodiment, tester 144 is shown in Figure 10 as an 8-bit device. The input 132 is connected to two dual 5-input positive NOR gates 150 and 152 such as Texas Instruments Incorporated No. 74260, Exhibit E, pages 56 & 57 of EP-A-0136379, connected to the inputs of a quadruple 2-input positive AND gate 154, such as Texas Instruments Incorporated No. 7408 Exhibit EE, pages 58 & 59 of EP-A-0136379. Gate 154 is connected to one input of a quadruple 2-input positive OR gate 156, such as Texas Instruments Incorporated No. 7432 Exhibit EEE, pages 60 & 61 of EP-A-0136379, the other input of which is from AND gate 158, such as Texas Instruments Incorporated No. 7408. One input of AND gate 158 is connected to one of the input lines 132. The other input is from line 146 through inverter 160, such as Texas Instruments Incorporated No. 7404, Exhibit AA. The output of OR gate 156 is connected to one input of OR gate 162 having another input from AND gate 164 which has an input from line 146 and an input from the output of inverter 168, such as Texas Instruments Incorporated No. 7404, Exhibit AA.

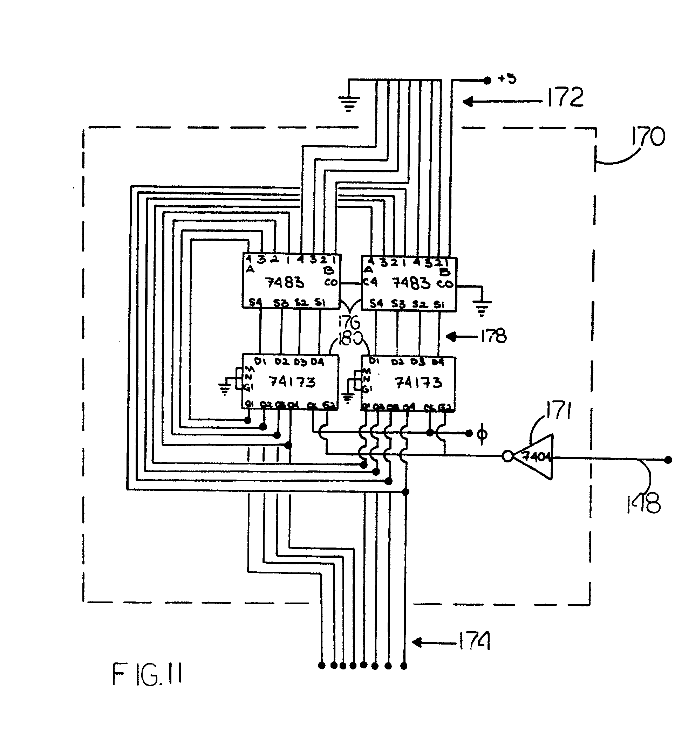

A clearable edge triggered latch 170 is shown in Figure 4 and shown in detail in Figure 11 with an adder attached as described below. Input 172 inserts a one (1) into latch 170. The output is transmitted on bus 174 to add latch 182. The latch 170 has two inputs on busses 108 and 172 and a single output on bus 174 which is the sum of the inputs. The output 178 of the adders 176, such as a 4-bit binary full adder of Texas Instruments Incorporated No. 7483 Exhibit C, become the input to the latches 180, such as 4-bit D-type registers with 3-state outputs, Exhibit D. One of the inputs to the adder is the output of the latch. The other input enters from above in Figure 11 and is wired permanently to be equal to 1. The latches 180 are triggered from bus 148 when it is high at the positive going edge of the read/write potential. The current latch contents exit from below over bus 174, to the add-latch 182. In the preferred embodiment, latch 170 is an 8-bit latch coupled to an adder with an 8-bit output and two 7-bit inputs as shown in Figure 11. The clearing connections are not shown in Figure 11, but may be accomplished by any well known manner.

Add-latch 182, shown in Figures 4 and 12, has its input from bus 174 from above. Add-latch 182 is triggered on the negative going edge of the read/write potential $\theta$ supplied through inverter 185. In the preferred embodiment, add-latch 182 includes four 4-bit binary full adders 184, such as Texas Instruments Incorporated No. 7483, connected by a 13-bit Latch coupled to four 4-bit D-type registers 186 with 3-stage outputs, such as Texas Instruments Incorporated No. 74173. Indicator/ readout devices of well known design may be connected thereto. The output of add latch 182 is an electrical output signal that may be translated to readable or other indications by any well known device. Clearing connections are not shown in Figure 12, but any well known devices or procedures may be used.

Referring now to Figure 13, the memory 190 contains the words ABC and ABB which are to be compared. They are transmitted via two transmitters 192 and 194 over a data stream four characters wide, as illustrated. The top half of the stream contains the transmission of the unaltered words and the bottom half contains the transmission of the flips of the words. On each side of the stream sits an observer 196 and 200. Each observer is watching a single column at a time as columns flow from left to right. The memory 190 and transmitters 192 and 194 correspond to the MSU 20 of Figure 1 and the data stream roughly for illustration purposes corresponds to the data bus 38 of Figure 2 (although query characters do not occur on the data bus or in the MSU). The two observers correspond for illustration purposes to the two copies of the circuit 100 shown in Figure 4 contained within the word associator 84 of Figure 2. To perform his appointed task, each observer must "remember" a numeric quantity associated with each alphabet member. In this example there are but three; A, B, and C. This collection of quantities corresponds for illustration purposes to tally 114 of Figure 4. Each observer must also "remember" a numeric quantity R that is 170 and another M that is 182. These correspond for illustration purposes directly with Figure 4. At each instant in time, each observer notices two characters before him. He processes one at a time in some fixed order, say top to bottom. First, he increments the quantity corresponding to the top character. Then if it is less than or equal to zero, he increments R. Next, he decrements the quantity corresponding to the bottom character. Then if it is greater than or equal to zero, he increments R. Finally, now that both characters are processed, he updates M by adding R to it. This continues for each column as they flow past.

7

In the above, it is assumed that the observer started with all quantities equal to zero. Once the record has passed, the two observers add together the values for M that they have arrived at. This result is then divided by L(L + 1) which in this case is 3(3 + 1) = 12. L is defined as the length of the compared words. Thus, we have 8/12 = 2/3 as the final similarity between the two words. Figure 13 displays the final state of all numeric quantities involved.

A basic mathematical formula has been created. If A is an alphabet, then words in A are finite concatenations of members from A. If w is a word in A, then $\overline{w}$ denotes the flip of w. For example, the flip of the word "abcd" is "dcba". If x and y are numbers then (x,y) denotes the greater of the two quantities x-y and O. If w is a word in A, then n(a,w,i) denotes the number of occurrences of alphabet member "a" in word w found in position i or beyond where position is measured canonically from left to right. If w and v are words in A, both of length L, then the degree of word similarity between them is denoted S(w,v) and is given by the formula below:

$$S(w,v) = \frac{L(L+1) - \sum_{a \in A} \sum_{i=1}^{L} (n(a,w,i,),n(a,v,i,)) + (n(a,\overline{w},i),n(a,\overline{v},i))}{L(L+1)}$$

This formula, as set forth above and well understood by those skilled in the art, produces a number between 0 and 1 inclusive. It produces 1 if and only if w and v are identical. It produces 0 if and only if w and v share no common alphabet members. Intermediate values are interpreted as degrees of similarity between these two extremes. Formulae exist and are discussed in "The Definition, Computation and Application of Symbol String Similarity Functions" referred hereinabove, which do not presume equality of the lengths of w and v. The above formula is, however, the most fundamental. It equally weighs all alphabet members and word positions. It corresponds to the circuit of Figure 4.

In the equation above, the fundamental computation is that involving the double summation. Various forms of the equation might still perhaps produce a useful measurement of word similarity. For example, the whole equation might be raised to some positive integral power. Faulk in the article (2) referred to hereinabove, discussed a function which also associated with each pair of words, a number between zero and one. But his function is considerably more complex and in practice is much more difficult to compute. This is discussed in the thesis referred to hereinabove. The disclosed formula rests on a simpler and more rigorous mathematical foundation, as pointed out in the thesis. Faulk also makes little attempt towards justifying his formula.

It should be noted that the circuit invention evolved from the formula to the algorithm to the circuit. The following criteria are met:
1. Mathematical simplicity
2. Ease of computation
3. Agreement with human intuition
4. Flexibility to permit varied applications.

The formula derived in the thesis and disclosed herein and made a part hereof is mathematically simple and produces results that appear to agree well with human intuition as referred to in the IEEE article referred to hereinabove. Computation of the formula in a straight forward fashion requires quite a bit of work, primarily due to the double summation.

The next evolutionary step is the invention of an algorithm which quickly computes the formula. This algorithm is presented herein in the form of a Fortran function subprogram. It is called with three input parameters: IQ, IR and N. IQ and IR each of which is a dimension N integer vector. Upon return, the variable Theta is the degree of similarity between the input words IQ and IR. Alphabet members are integers between 1 and 256 inclusive.

To process a character from each of the two words under comparison, the algorithm implemented in machine language on a modern general purpose CPU such as the IBM 370, requires the execution of dozens of instructions each comprised of many micro instructions.

To perform this same task, the circuit requires only two internal clock cycles. Each represents approximately a read/write cycle pertaining to a high speed random access memory. Actually, the clock must be slightly slower than the memory's maximum speed to permit other circuit components to operate. In use, however, the multiple should be less than 2. Therefore, the circuit is capable of computing the definition of word similarity much faster than any existent general purpose processor.

A complete similarity memory system may contain many such circuits. Therefore, the system would then be performing a search function beyond the capabilities of existent general CPU's. The basic algorithm as programmed in Fortran is:

```
            FUNCTION THETA (IQ, IR, N)
      C
      C IQ AND IR ARE EACH WORDS OF LENGTH N IN THE
      C ALPHABET CONSISTING OF THE NUMBERS 1 THROUGH 256.
      C THEY ARE PASSED AS INTEGER VECTORS EACH OF
      C DIMENSION N.  UPON RETURN, THETA ASSUMES THE
      C VALUE OF THE BASIC WORD SIMILARITY BETWEEN IQ
      C AND IR.
      C

            INTEGER R
            DIMENSION ITALLY (256), IQ(N), IR(N)
            DO 1 I=1,256
          1 ITALLY(I)=0
            MO=0
            R=0
      C
            DO 2 I=1,N
            ITALLY (IQ(I))=ITALLY(IQ(I))+1
            IF (ITALLY(IQ(I)).LE.0) R=R+1
            ITALLY (IR(I))=ITALLY(IR(I))-1
            IF (ITALLY(IR(I)).GE.0) R=R+1
          2 M=M+R
      C
```

```
        R=0
        DO 4 I=1,256
      4 ITALLY(I)=0
C

        DO 3 J=1,N
        I=N+1-J
        ITALLY (IQ(I))=ITALLY(IQ(I))+1
        IF (ITALLY(IQ(I)).LE.0)R=R+1
        ITALLY(IR(I))=ITALLY(IR(I))-1
        IF (ITALLY(IR(I)).GE.0) R=R+1
      3 M=M+R
C

        THETA=FLOAT(M)/(N*(N+1))
C

        RETURN
        END
```

Referring now to Figure 5, the SEL is a random aocess read/write memory 208. Its address enters on bus 224 from above and data output is to the right on a bus. In Figure 5, it is assumed that the read mode is selected as the device is only written to during master initialization. In the preferred embodiment the read/ write memory 208 is organized as 127 2-bit words.

SYN consists of three random access read/ write memories, 202, 204 and 206. In each, the address enters on bus 106' from above the data output transmitted on buses from below. In Figure 5, it is assumed that the read mode is selected as the device is only written to during master initialization. In the preferred embodiment, it is organized as three memories, each consisting of 256 8-bit words. Select is a data selector 210. It has three input busses, entering from above from SYNs 202, 204 and 206. One of these three is routed to a single output exiting below, depending upon the numeric value of the 2-bit value entering from the left from SEL 208. If this value is 0, then Select 210 ignores its input and outputs zero. If this value is 1, 2 or 3, then the first, second or third input data bus respectively is routed to the output. In the preferred embodiment, it has 8-bit inputs and outputs.

MV is a one bit latch 222. It is set/reset during master initialization. The current state of MV exits above.

Select 102' is a data selector. It has two input busses entering from above one from Select 210, and the other 104. One of these is routed to a single output 108' exiting below, depending upon the state of $\Theta$ entering from the right. If $\theta$ is low, then the right at 110' input bus 104 is selected. Otherwise, the left bus is selected. In the preferred embodiment, Select 102' has 8-bit inputs and outputs.

Double skip on zero is a circuit 2202 to block the propagation of $\phi$ and $\Theta$, for the duration of two $\phi$ cycles, provided that $\Theta=0$, $MV=1$ and the output from Select 210 is zero, at the time of a positive transition of $\phi$. This effectively causes the later circuit stages to ignore completely the current column. These altered versions of $\phi$ and $\Theta$ are then used by the central stage of the circuit.

PW is a random access read/write memory 226. Its address enters from the left from bus 224 and data output is down and to the right. In Figure 5, it is assumed that the read mode is selected, as the device is only written to during master initialization. In the preferred embodiment, it is organized as 127 2-bit words.

CW is a random access read/write memory 242. Its address enters from above from bus 108' and data output is to the right. In Figure 5 it is assumed that the read mode is selected, as the device is only written to during master initialization. In the preferred embodiment, it is organized as 256 2-bit words.

Distributor 246 is a data distributor. It has three outputs above and a 2-bit control input to the left from PW 226. When this input is zero, all three outputs are zero. When it is 1, 2, or 3, the first, second or third output goes high respectively, leaving the others zero. A variable shift register 244 shifts the output of CW 242, depending upon the output of PW 226 so as to affect the computation of the final weight. The variable shift register 244 comprises the combination of the three gate circuits 248, 250, and 252 and the distributor circuit 246.

Each gate circuit is a pair of logical AND gates used to control the propagation of the data output from CW 242. Both bits leaving CW enter each gate to the left. Inside each gate there are two 2-input AND gates. One input from each becomes a common control input shown entering from below. The remaining two inputs connect to the two entering data lines. The outputs from the gates are shown to the right. When the control input is low, the gate outputs zero. When it is high, gate simply propagates its two bit input. Single skip on zero is a circuit 230 to block the propagataion of $\phi$, for the duration of one $\phi$ cycle, provided that the cumulative output from the gate circuits 248, 250 and 252 is zero at the time of a positive transition or $\phi$. This altered version of $\phi$ is then used by the lowest circuit stage.

TOTR is an add-latch device 254. Its input from register 244 enters above and its output exits below. It is triggered on a positive transition of $\phi$ provided that $\theta = 1$. In the preferred embodiment, it is an 11-bit latch together with an adder having one 11-bit input and one four-bit input.

TOTM is an add-latch device 256. Its input enters above from TOTR 254. It is triggered on a negative $\theta$ transition. In the preferred embodiment, TOTM is a 17-bit latch together with an adder having one 17-bit input and one 11 bit input.

R is an add-latch device 170 (Figure 4). Its input 172 enters above and its output 174 exits below. It is triggered on a positive $\phi$ transition provided that T entering from the right on line 148 is equal to one. In the preferred embodiment, R is an 11-bit latch coupled to an adder having one 11-bit input and one four bit input.

M is an add-latch device 182 (Figure 4). Its input 174 enters above. It is triggered on a negative $\theta$ transition. In the preferred embodiment, it is a 17 bit latch together with an adder having one 17-bit input and one 11 bit input.

Sign test is defined as test 144 of Figure 4. L is defined as L 136 of Figure 4. Tally is defined as tally 114 of Figure 4. Adder is defined as add 126 of Figure 4.

Referring to Figure 5, this diagram illustrates how the basic circuit of Figure 4 may be considerably enhanced without sacrificing speed of processing.

In Figure 5, before data reaches the core or data selector, circuit 102' and the basic word associator circuit 112' (identical to circuits 102 and 112 shown in Figure 4) several tasks are performed. First, a memory word is fetched corresponding to the current column position being processed. If this word is zero, then the current column is ignored. This is accomplished by using the double skip on zero circuit 220 of well known design. This circuit merely blocks propagation of all timing signals during the current character pair. Therefore, the circuit ignores the current column. Whereas the circuit of Figure 4 processed every column unconditionally, this facility permits column selection in the circuit of Figure 5. If the fetched word is non zero, then it is used to select one of three tables to be used in translating the data character from the record before it reaches the core circuit 102'. This is called synonym processing and permits additional flexibility. The facilities above are implemented via the random access memory SEL 208 and the three random access memories SYN 202, 204, and 206, and by Selector 210 which simply selects one of the three outputs from the SYN memories 202, 204, and 206. The SEL 208 is of any well known design. The SYN 202, 204 and 206 is a set of three random access memories of a well known design. If the translated value of a record character is zero and the MV flag is set, then the entire current column is ignored as above. MV 222 is a one bit latch of a well known design. This permits the definition of missing value fields so as not to detract from the measure of the similarity between the record and the query. Position bus 224 is connected to SEL 208 and PW 226 that is a random access memory of well known design. The enhancements discussed so far constitute simple preprocessing and are not crucial to the basic invention. Some more crucial enhancements are now discussed.

In the circuit of Figure 4 it will be noted that the quantity "1" is always added to R 170. This has the effect of weighing all alphabet members and column positions equally. Figure 5 implements a weighing scheme wherein the column number currently under consideration and the current character are used to determine a weight which is to be added to R instead of "1". In this way, one can weigh characters heavier than others and one can weigh columns heavier than others. Generally speaking, many circuits might compute a weight to be used to update R. Figure 5 contains one such circuit. In this circuit, each alphabet character is assigned a two bit weight. Thus weights 0, 1, 2, 3 are possible. Each column position is also assigned a weight also of two bits. But this weight is used to control a shift register so that here the possible weights are 0, 1, 2, 4. The character weight is effectively multiplied by the column weight to arrive at the final weight. A complete word associator circuit must of course contain two copies of the circuit of Figure 5. It is observed that the positional weight tables defined for each copy might differ. This might allow certain columns to be processed with more emphasis on initial or on final characters. When the two tables agree, there is no such directional bias. It should be noted that when the final weight of a column/character pair is zero, the character is not processed. This is accomplished by the "single skip on zero" circuit 230 which blocks propagation of timing singals for the duration of a single character.

The weight scheme is implemented by the random access memories PW 226 and CW 242 of well known design and by the selectable shift register 244 formed by the distributor 246 and gate circuits 248, 250, and 252 and by the single skip on zero circuit 230, all of which are of well known designs.

In the circuit of Figure 4, the final result M needs to be divided by $N(N+1)$ where N is the length of the words under comparison, to arrive at the measure of similarity. In the circuit of Figure 5, this denominator must be computed since it will depend upon the weights encountered during processing. In Figure 5, TOTR 254 and TOTM 256 that are add-latches, compute a denominator term. A corresponding term is computed by the other copy of the circuit. The sum of these two terms is the final denominator. The final numerator is twice the sum of the two M values read out of the two circuit copies. The similarity between the query and bus words is the quotient of the numerator and the denominator quantities. The above is just one way in which the information read out of the circuit may be interpreted to arrive at a measurement of similarity. Other schemes might weigh various terms unequally. The circuit 112' in the lower right of Figure 5 is recognizable as very similar to the circuit of Figure 4. The only difference is that the selection component is now external and R may now be updated by quantities other than "1".

The circuit of Figure 5 is divided by dashed lines into three stages designated by I, II and III. Note that busses passing from stage to stage are broken. This indicates that buffers might be inserted to achieve a pipeline with three stages. In this way the circuit can process data as fast as the circuit of Figure 4. Without pipeline buffers, the circuit is two to three times slower. The timing signals are labeled identically in each stage but may vary from stage to stage both because of the optional pipeline and because of the skip on zero circuits.

The circuit of Figure 5 must be initialized before use. A master initialization must be performed once per search to establish weights, etc. This initialization must load the SEL 208, SYN 202, 204 and 206, PW 226, and CW 242 memories. Also, the MV 222 flag must be set or reset. Before each record is processed, additional initialization is required. The tally memory (not shown) in circuit 112' must be set to zero as must the add-latches R and M (not shown) and TOTR 254 and TOTM 256. After each record is processed, the contents of M (not shown) in the circuit 112', and TOTM 256 are read out of the circuit.

Connections describing initialization and readout are trivial and of well known design and are therefore not shown in the drawings.

Finally, note that in the circuit of Figure 5, the bus data character must be stable on the bus even during the processing of the query character. This permits the bus character to be translated while the query character, which does not pass through synonym translation, is processed. The query translation is better left to software since the query is fixed during a search.

The instant invention has been shown and described herein in what is considered to be the most practical and preferred embodiment. It is recognized, however, that departures may be made therefrom within the scope of the invention as claimed and that obvious modifications will occur to a person skilled in the art.

The associator or comparator circuit shown in Figure 4 may be constructed in electronic chip form for use as a circuit allowing inexact word queries in any system of other. Further this associator or comparator circuit may be utilized in an associative retrieval system as shown in Figures 1, 2 and/or 5.

**Claims**

1. A word comparator device for providing a numeric measurement of the degree of word similarity between a record word and a query word, characterised by first circuit means (102) including an output (108) for presenting record words (106) and query words (104) alternately, said first circuit means connected to a digital source of record words and query words, a read/write memory (114) for storing word count values and operably connected to said first and a second circuit means (126,136,144), said second circuit means for reading from and writing to said read/write memory (114) and for indicating at an output common portions of the words by generating control signals based on word counts, and third circuit means (170,182) including an input connected to the output of said second circuit means, said third circuit means for computing a numeric measurement of the weight of the common portions of the words, and for presenting a digital signal representing said numeric measurement at an output, said first circuit means, read/write memory, second circuit means and third circuit means operating for computation in a time span generally proportional to the average length of said words.

2. A device as claimed in claim 1, wherein said device provides the degree of word similarity which approximates the formula

$$S(w,v) = \frac{L(L+1) - \leq \sum\limits_{a \in A} \sum\limits_{i=1}^{L} (n(a,w,i,),n(a,v,i,)) + (n(a,\bar{w},i),n(a,\bar{v},i))}{L(L+1)}$$

where S(w,v) is the degree of word similarity between words w and v, being finite concatenations of members of alphabet A, both of length L, and n(a,w,i) denote the number of occurrences of alphabetic member "a" in word "w" found in position "i" or beyond when measured left to right or (n(a,$\bar{w}$,i)) when alphabetic members of the word are reversed.

3. A device as claimed in claim 2,including parameter circuit means (242,244) having an input connected to said first circuit means and an output for presenting word member weights, said second circuit means presenting at said output of said second circuit means the word member weights obtained from said parameter circuit means.

4. A device as claimed in claim 3, wherein said first circuit means includes word control means, and said parameter circuit means is a parameter generation means, said word control means including an output and presenting record words and query words alternately and presenting control information, said parameter generation means connected to said output of said word control means, and said parameter generation means for presenting a word member weight value for the word input from said word control means and for presenting all the inputs from said word control means, said output of said parameter generation means being said output of said first circuit means.

5. A device as claimed in claim 1, wherein said first circuit means includes a selecting means for alternately addressing and routing a query word character and a record word character to said first circuit means output; a record word storage area and a query word input/output device electrically coupled to the selecting means inputs; the read/write memory having a memory means input, memory means output, and updating input, said memory means input is connected to said selecting means output, said read/write memory means being for storage and retrieval of numeric information addressed by said selecting means; said second and third means including control timing circuit means for selecting either the read or write mode of said read/write memory and for defining whether a query word or record word is being processed, said control timing circuit being connected to said selecting means input for controlling the input of query words and record words, said control timing circuit means being connected to said read/write memory; an adder means including an adder input connected to said read/write memory output and an adder output, said adder means for incrementing or decrementing the numeric information and updating of said read/write memory; said control timing circuit means being connected to said adder means for controlling the state of said adder means; latching means connected to said adder output, for updating said read/write memory with said adder output; said control timing circuit means being connected to said latching means for controlling the state of said latching means, a test means including comparator means, said test means generating a test output depending on the state of said control timing circuit means, said test output being representative of the numeric character similarity between a query word and a corresponding record indicia string; said control timing circuit means being connected to said test means for controlling said test means and output latch means connected to said test means; said output latch means providing an output which represents a cumulative numeric measurement of the numeric character similarities representative of the degree of word similarity between the record word and the query word.

6. A device as claimed in claim 5, wherein said selecting means is a data selector means (102); said control timing circuit means includes a query word, record word clock circuit ($\theta$), and a read/write clock

EP 0 136 379 B1

circuit (φ) operating at twice the speed of said query word/record word clock; said read/write memory means is a random access read/write memory (114); said adder means (126) includes an incrementer/decrementer in which one of the summands is restricted to plus or minus one; said latching means is a positive edge triggered data latch (136); said tester means (144) is a convertible sign tester for determining if the input (132) is non-positive or non-negative; and said output latch means includes a clearable edge triggered latch (170) and an add-latch (182); said triggered latch (170) including adder means (176) and said add-latch (182) being connected to said triggered latch (170).

7. A word comparator means including first and second word comparator devices as claimed in claim 5 or 6, wherein the first word comparator device (100) is for comparison of a record word from right to left and the second word comparator device (100') is for comparison of a record word from left to right; a memory storage means (20,22); a query storage means (70); an interface (72) connected to said query storage means and said memory storage means; said interface connected to said first word comparator device (100) and said second word comparator device (100') and adding means (96) for producing a system output connected to said output of said first word comparator device and said output of said second word comparator device.

8. A method of digitally processing stored data words in an electronic data processor having a central processing unit with a working storage area, at least one random access storage device and at least one input/output means, comprising the steps of:generating a query word of sequential data characters; generating strings of sequential data characters, each said string representing a stored data word; comparing each data character of each said stored data word with a respective data character of said query word; calculating a forward similarity function between said query word and each said stored data word; reversing the sequence of said query word data characters and each said stored data word; comparing each data character of each said string with a respective data character of said query word; calculating a reverse similarity function between said query word and each said stored data word; calculating a total similarity function between each said stored data word and said query word; ranking said stored data word relative to said total similarity function.

**Revendications**

1. Dispositif comparateur de mots permettant d'obtenir une mesure numérique du degré de similitude de mot, entre un mot enregistré et un mot demandé, caractérisé en ce qu'il comprend un premier moyen formant circuit (102) comprenant une sortie (108) pour présenter alternativement des mots enregistrés (106) et des mots demandés (104), ledit premier moyen formant circuit étant connecté à une source numérique de mots enregistrés et de mots demandés, une mémoire de lecture/écriture (114) pour stocker les valeurs de comptage de mots et qui est connectée de manière opérationnelle audit premier moyen formant circuit et à un deuxième moyen formant circuit (126, 136, 144), ledit second moyen formant circuit servant à lire et à écrire dans la mémoire de lecture/écriture (114) et à indiquer à une sortie les parties communes des mots en générant des signaux de commande basés sur les comptages de mots, et un troisième moyen formant circuit (170, 182) comprenant une entrée connectée à la sortie dudit deuxième moyen formant circuit, ledit troisième moyen formant circuit servant à calculer une mesure numérique du poids des parties communes des mots, et à présenter à une sortie un signal numérique représentant ladite mesure numérique, ledit premier moyen formant circuit, ladite mémoire de lecture/écriture, ledit deuxième moyen formant circuit et ledit troisième moyen formant circuit fonctionnant pour effectuer des calculs dans un délai généralement proportionnel à la longueur moyenne desdits mots,

2. Dispositif selon la revendication 1, caractérisé en ce qu'il fournit le degré de similitude des mots qui se rapproche de la formule :

14

$$S(w,v) = \frac{L(L+1) - \sum_{a \in A} \sum_{i=1}^{L} (n(a,w,i,),n(a,v,i,)) + (n(a,w,i),n(a,v,i))}{L(L+1)}$$

où S(w,v) est le degré de similitude des mots w et v, ces derniers étant des concaténations finies de membres de l'alphabet A, tous deux de longueur L, et n(a,w,i) donne le nombre d'occurrences du membre alphabétique a dans le mot w trouvé en position i ou au-delà, lorsque la mesure est effectuée de gauche à droite ou $\overline{(n(a,\overline{w},i))}$ lorsque les membres alphabétiques du mot sont à l'envers.

3. Dispositif selon la revendication 2, caractérisé en ce qu'il comprend un moyen formant circuit de paramètres (242, 244) ayant une entrée connectée audit premier moyen formant circuit et une sortie pour présenter des poids de membres de mots, ledit deuxième moyen formant circuit présentant à sa sortie les poids de membres de mots obtenus par ledit moyen formant circuit de paramètres.

4. Dispositif selon la revendication 3, caractérisé en ce que ledit premier moyen formant circuit comprend un moyen de commande de mots, et ledit moyen formant circuit de paramètres est un moyen de génération de paramètres, ledit moyen de commande de mots comprenant une entrée et présentant alternativement des mots enregistrés et des mots demandés, et présentant des informations de contrôle, ledit moyen de génération de paramètres étant connecté à ladite sortie dudit moyen de commande de mots, et ledit moyen de génération de paramètres servant à présenter une valeur de poids de membre de mot pour l'entrée du mot à partir dudit moyen de contrôle de mot et servant à présenter toutes les entrées provenant dudit moyen de commande de mot, ladite sortie dudit moyen de génération de paramètres étant constituée par ladite sortie dudit premier moyen formant circuit.

5. Dispositif selon la revendication 1, caractérisé en ce que ledit premier moyen formant circuit comprend un moyen de sélection pour adresser et envoyer alternativement un caractère de mot demandé et un caractère de mot enregistré à la sortie dudit premier moyen formant circuit; une zone de stockage de mot enregistré et un dispositif d'entrée/sortie de mot demandé couplé électriquement aux entrées du moyen de sélection; la mémoire de lecture/écriture ayant une entrée de moyen de mémoire, une sortie de moyen de mémoire, et une entrée de mise à jour, ladite entrée de moyen de mémoire étant connectée à ladite sortie du moyen de sélection, ledit moyen de mémoire de lecture/écriture servant au stockage et au retrait d'informations numériques adressées par ledit moyen de sélection; lesdits deuxième et troisième moyens comprenant un moyen formant circuit de synchronisation de contrôle pour sélectionner soit le mode de lecture, soit le mode d'écriture de ladite mémoire de lecture/écriture et pour définir si le mot en cours de traitement est le mot demandé ou le mot enregistré, ledit circuit de synchronisation de contrôle étant connecté à ladite entrée de moyens de sélection pour contrôler l'entrée de mots demandés et de mots enregistrés, ledit moyen formant circuit de synchronisation de contrôle étant connecté à ladite mémoire de lecture/écriture; un moyen additionneur comprenant une entrée d'additionneur connectée à la sortie de ladite mémoire de lecture/écriture et une sortie d'additionneur, ledit moyen additionneur servant à incrémenter ou décrémenter les informations numériques et à mettre à jour ladite mémoire de lecture/écriture; ledit moyen formant circuit de synchronisation de contrôle étant connecté audit moyen additionneur pour contrôler l'état de ce dernier; des moyens de verrouillage connectés à ladite sortie d'additionneur pour mettre à jour ladite mémoire de lecture/écriture avec ladite sortie d'additionneur ; ledit moyen formant circuit de synchronisation de contrôle étant connecté audit moyen de verrouillage pour contrôler l'état de ce dernier; un moyen de test comprenant un moyen comparateur, ledit moyen de test générant une sortie de test dépendant de l'état dudit moyen formant circuit de synchronisation de contrôle, ladite sortie de test étant représentative de la similitude de caractère numérique entre un mot demandé et une chaîne indicielle correspondante enregistrée; ledit moyen formant circuit de synchronisation de contrôle étant connecté audit moyen de test pour contrôler ce dernier et ledit moyen de verrouillage de sortie connecté audit moyen de test; ledit moyen de verrouillage de sortie fournissant une sortie qui représente une mesure numérique cumulée des similitudes de caractères numériques représentative du degré de similitude des mots entre le mot enregistré et le mot demandé.

15

6. Dispositif selon la revendication 5, caractérisé en ce que ledit moyen de sélection est un moyen sélecteur de données (102); ledit moyen formant circuit de synchronisation de contrôle comprend un circuit d'horloge de mot demandé/mot enregistré (Θ), et un circuit d'horloge de lecture/écriture (φ) fonctionnant à une vitesse deux fois supérieure à celle de ladite horloge de mot demandé/mot enregistré; ledit moyen de mémoire de lecture/écriture est une mémoire de lecture/écriture d'accès aléatoire (114), ledit moyen additionneur (126) comprend un dispositif d'incrémentation/décrémentation dans lequel un des opérandes est restreint à plus ou moins un; ledit moyen de verrouillage est un verrou de données déclenché par un front positif (136); ledit moyen pour le test (144) est un appareil de test à signe convertible pour déterminer si l'entrée (132) est non positif ou non négatif;et ledit moyen de verrouillage de sortie comprend un verrou déclenché par un front et pouvant être effacé (170) et un verrou additionnel (182); ledit verrou déclenché (170) comprenant un moyen additionneur (176) et ledit verrou additionnel (182) étant connecté audit verrou déclenché (170).

7. Comparateur de mots comprenant des premier et deuxième dispositifs comparateurs selon l'une des revendications 5 ou 6, caractérisé en ce que le premier dispositif comparateur de mots (100) sert à la comparaison d'un mot enregistré de droite à gauche et le deuxième comparateur de mots (100') sert à la comparaison d'un mot enregistré de gauche à droite; et en ce qu' il comprend un moyen de stockage en mémoire (20,22); un moyen de stockage de la demande (70); une interface (72) connectée audit moyen de stockage de la demande et audit moyen de stockage en mémoire; ladite interface étant connectée au premier dispositif comparateur de mots (100), au deuxième dispositif comparateur de mots (100') et au moyen additionneur (96) pour produire une sortie de système connectée à ladite sortie dudit premier dispositif comparateur de mots et à ladite sortie dudit deuxième dispositif comparateur de mots.

8. Procédé pour traiter numériquement des mots de données stockés dans un processeur de données électronique ayant une unité de traitement centrale avec une zone de stockage de travail, au moins un dispositif de stockage à accès aléatoire et au moins un moyen d'entrée/sortie, ledit procédé étant caractérisé en ce qu'il comprend les étapes de : génération d'un mot demandé à caractères de données séquentielles; génération de chaînes de caractères de données séquentielles, chacune desdites chaînes représentant un mot de donnée stocké; comparaison de chaque caractère de données de chacun desdits mots de données stockés avec un caractère de données correspondant dudit mot demandé; calcul d'une fonction de similitude vers l'avant entre ledit mot demandé et chacun desdits mots de données stockés; renversement de la séquence desdits caractères de données du mot demandé et de chacun desdits mots de données stockés; comparaison de chaque caractère de données de chacune desdites chaînes avec un caractère de données correspondant dudit mot demandé; calcul d'une fonction de similitude inverse entre ledit mot demandé et chacun desdits mots de données stockés; calcul d'une fonction de similitude totale entre chacun desdits mots de données stocké et ledit mot demandé; classement en rang dudit mot de données stocké par rapport à ladite fonction de similitude totale.

## Ansprüche

1. Gerät zum Wortvergleich, um eine numerische Messung des Grades von Wortähnlichkeit zwischen einem Speicherwort und einem Abfragewort zu liefern, gekennzeichnet durch ein erstes Schaltkreis-Element (102), das einen Output (108) zur abwechselnden Darbietung von Speicherwörtern (106) und Fragewörtern (104) umfaßt, wobei besagtes erstes Schaltkreis-Element mit einer digitalen Quelle von Speicherwörtern und Abfragewörtern verbunden ist, einen Lese-/Schreibspeicher (114) zur Speicherung von Wortzählwerten, der betriebsbereit mit besagtem ersten Schaltkreis- Element und einem zweiten Schaltkreis-Element (126, 136, 144) verbunden ist, wobei besagtes zweites Schaltkreis- Element aus besagtem Lese-/ Schreibspeicher (144) einliest und darin hineinschreibt und bei einem Output gemeinsame Wortbestandteile durch Erzeugen von Kontrollsignalen indiziert, die sich auf Wortzählungen stützen, und ein drittes Schaltkreis- Element (170, 182), das einen Input enthält, der mit dem Output von besagtem zweiten Schaltkreis-Element verbunden ist, wobei besagtes drittes Schaltkreis-Element eine numerische Messung des Gewichtes der gemeinsamen Wortbestandteile berechnet und ein digitales Signal bereitstellt, das besagte numerische Messung an einem Output repräsentiert, wobei besagtes erstes Schaltkreis-Element, der Lese-/Schreibspeicher, das zweite Schaltkreis-Element und das dritte Schaltkreis-Element zur Berechnung in einer Zeitspanne arbeiten, die im allgemeinen proportional zur durchschnittlichen Länge besagter Wörter ist.

2. Gerät gemäß Anspruch 1, worin besagte Vorrichtung mit einem Grad von Wortähnlichkeit versehen ist, der sich der Formel nähert:

$$S(w,v) = \frac{L(L+1) - \sum_{a \in A} \sum_{i=1}^{L} (n(a,w,i,),n(a,v,i,)) + (n(a,w,i),n(a,v,i))}{L(L+1)}$$

wobei S(w,v) der Grad einer Wortähnlichkeit zwischen Wörtern w und v ist, eine finite Verkettung von Elementen des Alphabet A, beide mit der Länge L, und n(a,w,i) bezeichnet die Anzahl von Vorkommen des alphabetischen Elementes "a" im Wort "w", gefunden in Position "i" oder unterhalb, wenn von links nach rechts gemessen wurde oder (n(a,w,i)), wenn alphabetische Elemente des Wortes umgekehrt wurden.

3. Ein Gerät gemäß Anspruch 2, das ein Parameter-Schaltkreis-Element (242, 244) enthält, das einen Input, der mit besagtem ersten Schaltkreis-Element verbunden ist, aufweist und einen Output zur Darstellung von Wortelementgewichten, wobei besagtes zweites Schaltkreis-Element am besagten Output von besagtem zweiten Schaltkreis-Element die Gewichte der Wortelemente darstellt, die von besagtem Parameter-Schaltkreis-Element erlangt wurden.

4. Gerät gemäß Anspruch 3, worin besagtes erstes Schaltkreis-Element Wortkontrolleinrichtungen enthält, und besagtes Parameter-Schaltkreis-Element eine Parameter-Erzeugungseinrichtung ist, wobei besagte Wortkontrolleinrichtung einen Output enthält und Speicherwörter und Abfragewörter abwechselnd darstellt und Kontrollinformationen darstellt, wobei besagte Parameter-Erzeugungseinrichtung mit besagtem Output von besagter Wortkontrolleinrichtung verbunden ist, und besagte Parameter-Erzeugungseinrichtung einen Gewichtswert eines Wortelementes darstellt für den Wortinput von besagter Wortkontrolleinrichtung und alle Inputs von besagter Wortkontrolleinrichtung darstellt, wobei besagter Output von besagter Parameter-Erzeugungseinrichtung besagter Output von besagtem ersten Schaltkreis-Element ist.

5. Gerät gemäß Anspruch 1, worin besagtes erstes Schaltkreis-Element eine Auswähleinrichtung zum wechselnden Adressieren und Leiten eines Fragewortzeichens und eines Speicherwortzeichens zu besagtem ersten Schaltkreis-Element-Output enthält; ein Speicherwort-Speicherbereich und eine Fragewort-Input/Output-Vorrichtung, die mit den Auswähleinrichtungs-Inputs elektrisch gekoppelt ist; der Lese-/ Schreibspeicher verfügt über einen Input der Speichereinrichtung, einen Output der Speichereinrichtung und einen Update-Input, wobei besagter Input der Speichereinrichtung mit besagtem Output der Auswähleinrichtung verbunden ist und besagte Lese-/Schreibspeichereinrichtung zur Speicherung und Wiedergewinnung von numerischer Information ist, die von besagter Auswähleinrichtung adressiert wurde; besagte zweite und dritte Schaltkreis-Elemente enthalten ein Zeitsteuerungsschaltkreis-Element, um entweder den Lese-oder Schreibmodus von besagtem Lese-/Schreibspeicher auszuwählen und um zu bestimmen, ob ein Abfragewort oder ein Speicherwort bearbeitet wird, wobei besagtes Zeitsteuerungsschaltkreis-Element mit besagtem Input der Auswähleinrichtung zur Kontrolle des Inputs von Abfragewörtern und Speicherwörtern verbunden ist und besagtes Zeitsteuerungsschaltkreis-Element mit besagtem Lese-/Schreibspeicher verbunden ist; eine Additionseinrichtung, die einen Additions-Input, der mit besagtem Lese-/Schreibspeicher-Output verbunden ist, enthält, und einen Additions-Output, wobei besagte Additionseinrichtung die numerische Information vermehrt oder reduziert und besagten Lese-/Schreibspeicher aktualisiert; besagtes Zeitsteuerungsschaltkreis-Element ist mit besagter Additionseinrichtung verbunden, um den Status von besagter Additionseinrichtung zu kontrollieren; eine Schaltvorrichtung, die mit besagtem Additions-Output verbunden ist, um besagten Lese-/Schreibspeicher mit besagtem Additions-Output zu aktualisieren; besagtes Zeitsteuerungsschaltkreis-Element, das mit besagter Schaltvorrichtung verbunden ist, um den Status von besagter Schaltvorrichtung zu kontrollieren, eine Testeinrichtung, die eine Vergleichseinrichtung enthält und besagte Testeinrichtung einen Test-Output erzeugt, der von dem Status von besagtem Zeitsteuerungsschaltkreis-Element abhängig ist, wobei besagter Test-Output repräsentativ für die numerische Zeichenähnlichkeit zwischen einem Abfragewort und einem entsprechenden Speicherindizienstring (record indicia string) ist; besagtes Zeitsteuerungsschaltkreis-Element ist mit besagter Testeinrichtung verbunden, um besagte Testeinrichtung zu kontrollieren, und eine Output-Schaltvorrichtung ist mit besagter Testeinrichtung verbunden; besagte Output-Schaltvorrichtung liefert einen Output, der eine kumulative numerische Messung der numerischen Zeichenähnlichkeiten repräsentiert, repräsentativ für den Gard der Wortähnlichkeit zwischen dem Speicherwort und dem Abfragewort ist.

6. Gerät gemäß Anspruch 5, worin besagte Auswähleinrichtung eine Datenauswähleinrichtung (102) ist; besagtes Zeitsteuerungsschaltkreis-Elemententhält ein Abfragewort, ein Speicherwort-Zeittaktschaltkreis-Element ($\theta$) und ein Lese-/Schreib-Zeittaktschaltkreis-Element ($\phi$), der mit doppelter Geschwindigkeit als besagtes Abfragewort/Speicherwort-Zeittaktschaltkreis-Element arbeitet; besagte Lese-/Schreibspeichereinrichtung ist ein Random-Access Lese-/Schreibspeicher (114); besagte Additionseinrichtung (126) beinhaltet eine Zuwachs/Reduktionseinrichtung, in der einer der Summanden auf plus oder minus eins beschränkt wird; besagte Schaltervorrichtung ist ein positiver rand-getriggerter Datenschalter (136); besagte Prüfeinrichtung (144) ist eine konvertible Signalprüfeinrichtung, um zu entscheiden, ob der Input (132) nicht-positiv oder nicht-negativ ist; und besagte Output-Schaltvorrichtung enthält einen löschbaren rand-getriggerten Schalter (170) und einen Additions- Schalter (182); besagter getriggerter Schalter (170) enthält Additionseinrichtung (176) und besagter Additions-Schalter (182) ist mit besagtem getriggerten Schalter (170) verbunden.

7. Gerät zum Wortvergleich, das eine erste und zweite Wortvergleichseinrichtung enthält, wie sie in Anspruch 5 oder 6 beansprucht wird, worin die erste Wortvergleichseinrichtung (100) zum Vergleich eines Speicherwortes von rechts nach links, und die zweite Wortvergleichseinrichtung (100') für den Vergleich eines Speicherwortes von links nach rechts dient; eine Speichereinrichtung (20, 22); eine Abfragespeichereinrichtung (70); ein Interface (72), das mit besagter Abfragespeichereinrichtung und besagter Speichereinrichtung verbunden ist; besagtes Interface, verbunden mit besagter erster Wortvergleichseinrichtung (100) und besagter zweiter Wortvergleichseinrichtung (100') und Additionseinrichtung (96) produzieren einen System-Output, der verbunden ist mit besagtem Output von besagter erster Wortvergleichseinrichtung und besagtem Output und besagter zweiter Wortvergleichseinrichtung.

8. Verfahren zum digitalen Verarbeiten von gespeicherten Datenwörtern in einer elektronischen Datenverarbeitungsanlage, die eine zentrale Recheneinheit mit einem Arbeitsspeicher aufweist, mit mindestens einer Random-Access-Speichereinrichtung und mindestens einer Input/ Output-Vorrichtung, das die Verfahrensschritte enthält: Erzeugen eines Abfragewortes aus aufeinanderfolgenden Datenzeichen; Erzeugen von Strings aus aufeinanderfolgenden Datenzeichen, wobei jeder String ein gespeichertes Datenwort repräsentiert; Vergleich von jedem Datenzeichen von jedem besagten gespeicherten Datenwort mit einem entsprechenden Datenzeichen von besagtem Abfragewort, Berechnung einer Vorwärts-Ähnlichkeitsfunktion zwischen besagtem Abfragewort und jedem besagtem gespeicherten Datenwort; Umkehrung der Abfolge von besagtem Abfragewort-Datenzeichen und von jedem besagten gespeicherten Datenwort; Vergleich von jedem Datenzeichen und von jedem besagten String mit einem jeweiligen Datenzeichen von besagtem Abfragewort; Berechnung einer umgekehrten Ähnlichkeitsfunktion zwischen besagtem Abfragewort und jedem besagten gespeicherten Datenwort; Berechnung einer gesamten Ähnlichkeitsfunktion zwischen jedem besagten gespeicherten Datenwort und besagtem Abfragewort; Einreihung des besagten gespeicherten Datenwortes in Beziehung Zur besagten gesamten Ähnlichkeitsfunktion.

FIG. I

FIG. 2

FIG.3

FIG. 4

FIG. 5

FIG.6

FIG. 7

FIG.8

FIG. 9

EP 0 136 379 B1

FIG.10

FIG.11

FIG.12

FIG. 13